# EUROPEAN PATENT APPLICATION

(11) **EP 1 455 512 A1**
(43) Date of publication of application: **08.09.2004**
(21) Application number: 03004374.9
(22) Date of filing: 03.03.2003
(51) Int. Cl.: H04M 19/00, H02J 1/00

(54) **Power supply assembly for at least one telecommunications distribution point**

(71) Applicant: 3M Innovative Properties Company, St. Paul, Minnesota 55133-3427 (US)
(72) Inventor: Mansholt, Michael, 42697 Solingen (DE); Koruschowitz, Axel, 42781 Haan (DE); Fischer, Wolf-Dieter, 42281 Wuppertal (DE)
(74) Representative: HOFFMANN - EITLE

(57) **Abstract**

A power supply assembly (10) for at least one telecommunications distribution point includes at least one central power unit (12), and at least one remote unit (14, 16, 18, 20), which is mountable in the distribution point and connectable or integrated with at least one module of the distribution point, wherein the remote unit (14, 16, 18, 20) is connected with the central power unit (12) via at least one cable (24, 26, 28, 30, 32).

## Description

### Technical Field

The invention relates to a power supply assembly for at least one distribution point in the field of telecommunications.

### Background

In the field of telecommunications, numerous customers or subscribers have to be connected with a switch of a telecommunications company. For the necessary connections, numerous distribution points are necessary. In main distribution frames, which are located at a central office, a first, central distribution point is established. Further distribution points, called co-location distribution points, might be necessary at a point where several telecommunications lines, which are to be passed to a different telecommunications company, are collected. Furthermore, remote distribution points are established, e.g. at the roadside, in order to distribute a bundle of lines coming in from the central office or another distribution point, to a number of houses. Finally, large buildings can have their own distribution point in order to distribute cables, which come in as a bundle, to a number of offices or subscribers.

Up to now, the described distribution points mainly served the purpose of distributing the cables. In other words, the necessary connections between cables were established in order to connect the subscribers with the switch. By means of patch cables or jumper wires, these connections can be made changeable or adjustable. Generally, up to recent times, merely passive components were present in these distribution points. This means that sections of telecommunications lines were connected with each other at the distribution points. However, the signal was usually not processed in any manner. Rather, if any, only passive electrical components like overvoltage protectors were present. Also with the increasing use of ADSL technology, only passive splitters were used. The splitters split a combined signal, which is transmitted via a telecommunications line, into two separate signals, which were transmitted as a combined signal in separate frequency bands. The splitters usually contain one or more filters for performing the required function. As mentioned, also the splitters used for ADSL technology are passive devices.

However, in the future, it will be more and more desirable to make use of active components in distribution points. E.g., it will be beneficial to provide test and measurement access to telecommunications lines by means of suitable test devices. The test devices can be located remote from modules which are present in a distribution point. However, the electrical connections in the modules will be switchable so as to connect a particular telecommunications line with the remote test device. The described arrangement thus employs one or more active components, such as switches, which are present in a distribution point. In other words, components and/or devices, which need energy in order to perform the required functions, will be located in distribution points, such as main distribution frames.

A central office usually contains numerous main distribution frames. It is generally possible to provide a power unit for each main distribution frame (MDF) and connect each of these MDF-based power units with the central power supply of the central office.

### Summary of the Invention

The invention provides a power supply assembly for a distribution point in the field of telecommunications, which saves space in the distribution point, to which power is to be supplied.

The novel power assembly for at least one distribution point in the field of telecommunications comprises at least one central power unit and at least one remote unit, which is mountable in the distribution point and connectable or integrated with at least one module of the distribution point. The remote unit is connected with the central power unit via at least one cable.

By "power supply assembly" it is meant that the invention provides an assembly of the described units, the central power unit and the remote units, as well as the electrical connections or the wiring therebetween. The power supply assembly is applicable to any type of distribution point.
The distribution point can be a main distribution frame which is located in a central office. However, any other distribution points, such as a co-location distributor or a cable distributor can be provided with the novel power supply assembly.

The central power unit is connected with the central power supply. In the case of applying the novel power supply assembly in a central office, the central power unit is connected with the central power supply of the office. It should be noted that the central power unit of the power supply assembly can be a so-called exchange battery which is always present at the central office. However, the central power unit of the power supply assembly can also include a separate unit, which is, as mentioned above, either connected with the exchange battery or the central power supply of the office. In other types of distribution points, which can be remote distribution points, such as cable distributors, the central power unit can be connected with a suitable power supply, e.g. a standard circuit or power outlet. Generally, the central power unit can supply a certain voltage, which it can receive, e.g. from the exchange battery, more or less directly. In particular, any converters or transformers might not be necessary. Rather, the exchange battery supplies voltage, which is suitable for being supplied to the remote unit by the central power unit. As described in more detail below, the central power unit can have suitable protection means. Furthermore, the central power unit can also be supplied with any other type of voltage. As examples, alternating current with 115 V or 230 V as well as direct current with, e.g. 24 V, 48 V or 6,0 V can be supplied to the central power unit. By means of,suitable transformers or converters, AC/DC- and DC/DC-converters respectively, the central power unit can convert the power, which is supplied to it, into a voltage, which is suitable for being supplied to the remote units.

The central power unit can not only be adapted to provide a power supply, but the central power unit can also contain any central components, such as test devices, which are to be connected with the remote modules of the distribution point. Therefore, the provision of an additional unit apart from the exchange battery has the advantage that any connections with the remote modules are guided to the central power unit. If the exchange battery would be used as the central power unit, the power cables would have to be guided to the exchange battery, whereas any other cables would be guided to a separate central unit, such as a central testing unit. In particular, the central power unit can be provided in a central unit, such as a central sub-rack, which can contain further central components. Particularly in this case, phantom powering, which is described in more detail below, can be used.

The power supply assembly further includes at least one remote unit, which is mountable in the distribution point. The remote unit is integrated, connected or connectable with at least one module of the distribution point. The remote unit can also be a part of an existing module in an existing distribution point or frame. Thus, the power supply assembly serves to supply modules of a distribution point with power. In the form of the at least one remote unit, the distribution point, such as an MDF, will have a unit associated therewith, which can convert the power supplied from the central power unit to the power required for the specific purpose in the distribution point. E.g., when a module of a distribution point is provided with a switchable test and measurement access, the remote unit will provide the power to actuate the necessary switches. The remote unit can comprise one or more converters for this purpose.

In the novel power supply assembly, the remote units are connected with the central power unit via at least one cable. Thus, the gist of the invention can be seen in the fact that the power supply for a distribution point is structured in a similar manner as a telecommunications network. Therefore, the connection between the remote units and the central power unit can be provided by a regular power cable. However, the central power unit can be connected with numerous remote units via cables, which have characteristics having more similarities with telecommunications cables than with power cables. The invention makes use of the finding that the power required for purposes like switching in a distribution point, is comparably low. Usually, the voltage will e.g. be 48 volts. This voltage can be transmitted by telecommunications cables. Thus, the invention can use the type of cable, which is already present in a distribution point and renders the installation of the power supply assembly very easy. This is because cable management systems, which are already present for the telecommunications cables, in other words, the subscriber lines, can also be used for the additional cables and wiring of the power supply. The cables used in the novel power supply can have a cross-section of a few tenth parts of a millimeter up to about one millimeter in diameter. This, firstly, saves space and, secondly, takes account of the specific situation in a typical distribution point in the field of telecommunications. The cables used in the power supply assembly can be twin wires or wire pairs as known in the field of telecommunications. Furthermore, twisted wire pairs can be used.

As regards the lines in the form of telecommunications cables, which can be used for connecting the remote units with the central power unit, these lines can be especially dedicated lines which are provided for the purpose of remote powering alone. However, also existing telecommunications lines can be used by realizing phantom powering. In phantom powering, two symmetrical pairs of lines or wires are used to transmit both a signal via each pair of lines, and the supply power. This is done by means of signal transmitters which separate a changing signal from a constant signal. The constant parts of the signal neutralize each other in the signal transmitters. This can be done by the use of coils, one in each line, having the same amount of windings. Finally, instead of the second pair of lines, a common grounding line can be used.

Furthermore, the power supply assembly saves space as any components, such as fuses, overcurrent detectors and circuit breakers can be located in the central power unit. In this manner, the space required for the remote units is minimized. This is advantageous, because the capacity of the distribution point is not reduced more than necessary by the remote units. Rather, the size of these can be minimized, and the necessary functions, such as overvoltage and overcurrent protection can be realized, as they are established in the central power unit.

The structure of the connections between the central power unit and the remote units can be of any suitable type. In particular, more than one remote unit can be connected with a central power unit by means of a star structure. This essentially means that more than one branch line is branched off from a central line leading to the central power unit.

Furthermore, more than one remote unit can be connected with the central power unit by means of a bus structure. This means that a bus line running along several remote units is present. So-called stub wires are branched off from the bus line in order to connect the remote units with the central power unit, to which the bus leads.

More than one remote unit can, furthermore, be connected in the form of a cascade. In such a cascade, a first remote unit is connected with the central power unit. A further remote unit is connected with the first remote unit. Further electrical connections with further remote units can be established in the very same manner.

In order to protect the entire assembly, the central power unit can have at least one overcurrent detector or protector, in particular a fuse. This, firstly, reduces the space, which is necessary for the remote units. Secondly, it provides the necessary protection against overcurrent. In particular, fuses can be provided to protect the remote units. Moreover, one or more suitable fuses can be provided to protect the central power unit and/or the entire power supply assembly. In particular, it can advantageously be ensured that the power supply, such as the exchange battery, to which the central power unit is connected, is protected in the case of a malfunction of the power supply assembly.

In the same manner, the central power unit can have at least one overvoltage protector. In this manner, the central power unit and/or one or more of the remote units can be protected from overvoltage.

The central power unit can also have at least one circuit breaker in order to interrupt any electrical connection, in which a short circuit or any other malfunction might have occurred.

The distribution point, to which the novel power supply assembly is applied, can be a main distribution frame or any other type of distribution point.

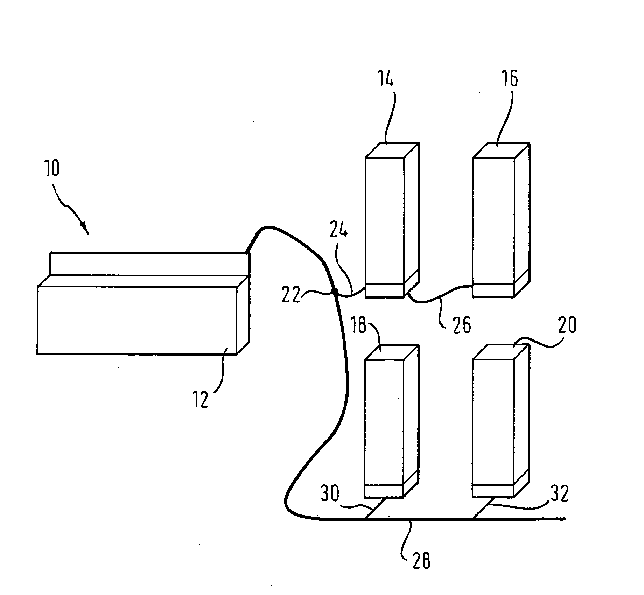

### Brief Description of the Drawing

Hereinafter, the invention is described by means.of a nonlimiting example with reference to the enclosed drawings, in which the figure shows the structure of the power supply assembly in a schematic view.

### Detailed Description of a Preferred Embodiment of the Invention

The figure shows the general structure of the power supply assembly 10. The power supply assembly 10 includes in this case one central power unit 12 and in total four remote units 14, 16, 18 and 20. In the case shown, two of the remote units 14, 16 on the one hand, and two further remote units 18, 20 are connected with the central power unit by means of a star structure. This implies a branch-off point 22, at which the cable leading to the units 14 and 16, and the cable leading to the remote units 18 and 20, meet.

As regards the remote units 14 and 16, these are connected in the manner of a cascade. The first unit 14 is connected with the central power unit by means of a first line 24. The second remote unit 16 is connected with the first remote unit 14 via a second line 26. Further remote units can be connected by connecting a third remote unit with the second remote unit 16 and so on.

In the lower part of the figure, a bus structure is shown for two remote units 18 and 20. A bus 28 is connected with the central power unit 12. Power can be supplied to the remote unit 18 by means of a stub wire 30. A similar stub wire 32 can be provided for supplying power to the remote unit 20.

In the novel power supply, any of the lines 24, 26, 28, 30 and 32 can be provided in the form of telecommunications cables. This advantageously makes use of those types of cables, which are present in a distribution point in any case and are, therefore, adapted to the specific situation in a distribution point. It is to be understood that the number of remote units, namely four, which are shown in the drawing, is only provided for the purpose of explanation, and many more remote units can be connected with a central power unit by means of the suitable structure, such as star and/or cascade and/or bus structure.

## Claims

1. A power supply assembly (10) for at least one telecommunications distribution point, including:
- at least one central power unit (12), and
- at least one remote unit (14, 16, 18, 20) mountable in the distribution point and connectable or integrated with at least one module of the distribution point,
- wherein the remote unit (14, 16, 18, 20) is connected with the central power unit (12) via at least one cable (24, 26, 28, 30, 32).

2. The power supply assembly in accordance with claim 1, wherein more than one remote unit (14, 16, 18, 20) is connected with the central power unit (12) via a star structure.

3. The power supply assembly in accordance with claim 1 or 2, wherein more than one remote unit (18, 20) is connected via a bus structure (28, 30, 32).

4. The power supply assembly in accordance with any of claims 1 to 3, wherein more than one remote unit (14, 16) is connected with the central power unit (12) in the form of a cascade.

5. The power supply assembly in accordance with any of the preceding claims, wherein the central power unit (12) has at least one overcurrent detector or protector, in particular a fuse.

6. The power supply assembly in accordance with any of the preceding claims, wherein the central power unit (12) has at least one overvoltage protector.

7. The power supply assembly in accordance with any of the preceding claims, wherein the central power unit (12) has at least one circuit breaker.

8. The power supply assembly in accordance with any of the preceding claims, wherein the distribution point is a main distribution frame.
